# EUROPÄISCHE PATENTSCHRIFT

(11) **EP 2 463 154 B1**
(45) Veröffentlichungstag und Bekanntmachung des Hinweises auf die Patenterteilung: **23.03.2016**
(21) Anmeldenummer: 10194470.0
(22) Anmeldetag: 10.12.2010
(51) Int. Cl.: B60Q 1/26, G02B 6/00, B60R 1/12

(54) **Leuchtanzeige hinter dem Spiegelglas eines Außenspiegel eines Fahrzeugs**
Illuminated display behind the mirror glass of a vehicle's exterior rear view mirror
Affichage lumineux derrière de la glace d'un rétroviseur extérieur d'un véhicule

(43) Veröffentlichungstag der Anmeldung: 13.06.2012
(73) Patentinhaber: SMR Patents S.à.r.l., 1653 Luxembourg (LU)
(72) Erfinder: Goldschmidt, Sönke, 71384, Weinstadt (DE)
(74) Vertreter: Weber-Bruls, Dorothée

(56) Entgegenhaltungen:
- EP-A1- 1 544 537
- EP-A1- 1 970 736
- EP-A2- 1 167 870
- JP-A- 2000 184 137
- JP-A- 2004 001 710

## Beschreibung

Die Erfindung betrifft eine optische Anzeige nach dem Oberbegriff von Anspruch 1, nämlich eine Leuchtanzeige, wie sie in einem Außenspiegel eines Fahrzeugs verwendet wird. Die Erfindung betrifft dabei eine Leuchtanzeige mit der das Licht auf den Beobachter gerichtet werden kann.

Es sind Rückblickspiegel bekannt, bei denen Anzeigen hinter dem Spiegelglas vorgesehen sind. Sie sind aufwändig ausgebildete Systeme, die aus einer Anzeige und einer für die Anzeige konzipierten elektronischen Schaltung bestehen. Im Bereich der Anzeigen sind die reflektierenden Beschichtungen der Spiegel entfernt, so dass die Anzeige in einem breiten Abstrahlwinkel optische Informationen in Form von Schrift, Symbol und/oder Warnlichtern abstrahlen können.

Aus der DE 198 08 393 A1 ist eine Anzeigevorrichtung für Kraftfahrzeuge bekannt, bei der optische Informationen über die Spiegelfläche eines Rückblickspiegels an den Fahrer oder andere Verkehrsteilnehmer übermittelt werden.
Dazu wird von einer Lichtquelle Licht in die Stirnfläche eines Lichtleiters emittiert und an dessen anderer Stirnseite im Gehäuse im Wesentlichen parallel zur Spiegelfläche durch die Lichtaustrittsöffnungen im Spiegelglas oder des Spiegelgehäuses abgestrahlt. Durch die optischen Informationen werden andere Verkehrsteilnehmer irritiert und sogar beeinträchtigt.

Aus der WO 00/06944 ist ein Außenrückblickspiegel mit einer Anzeigeeinheit bekannt, die hinter einem Spiegelglas liegt. Hierbei wird Licht von einer Lichtquelle über eine Sammeloptik und eine Optikscheibe auf eine Filterfolie abgestrahlt, die das Licht ausrichtet.

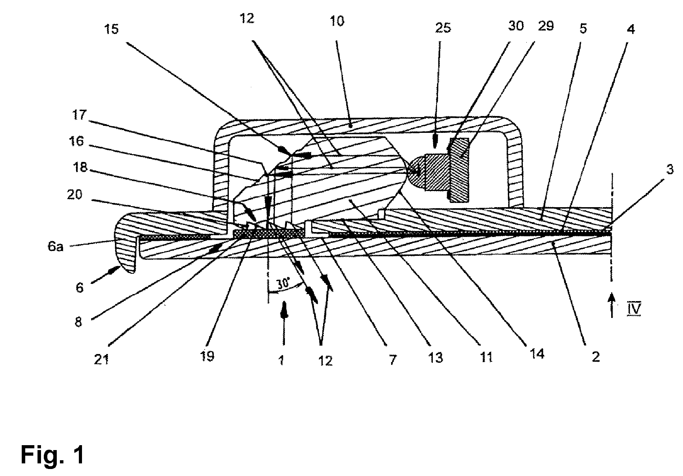

Aus der EP 1 970 736 A1 ist eine Anzeigeeinheit im Außenspiegel bekannt. Dieser Stand der Technik verwendet eine Vielzahl von Komponenten um eine optimale Abstrahlung in Richtung Fahrer zu erzielen. Der Stand der Technik wird in Figur 1 erläutert.
Ein Blinker eines Außenspiegels mit einem geformten Lichtleiter und einer Vielzahl von LEDs ist in der JP 2004001710 beschrieben.
Die EP 1 167 870 A2 betrifft eine Leuchte für ein Fahrzeug.
Eine Lichtleiterplatte für eine Flüssigkristallanzeigeeinrichtung ist aus der EP 1 544 537 A1 bekannt.
Die JP 2000184137 betrifft eine Oberflächenlichtquelleneinrichtung.

Die Erfindung liegt die Aufgabe zugrunde, die gattungsgemäße Anzeige derart weiterzuentwickeln, dass bei einfacher konstruktiver Gestaltung das durch das Spiegelglas hindurchtretende Licht andere Verkehrsteilnehmer als den Fahrer nicht beeinträchtigt und einen homogen Ausleuchtung der zu beleuchtenden Fläche stattfindet.

Diese Aufgabe wird erfindungsgemäß gelöst durch die Merkmale des Kennzeichens von Anspruch 1. Bevorzugte erfindungsgemäße optische Anzeigen sind in den Ansprüchen 2 bis 13 beschrieben.

Die Erfindung wird anhand mehrerer in den Zeichnungen dargestellter Ausführungsbeispiele näher erläutert.

Es zeigt:
- Fig. 1 :: im Schnitt eine Leuchtanzeige im Stand der Technik,
- Fig. 2 :: in perspektivischer Darstellung eine Anzeigeeinheit
- Fig. 3:: zeigt eine Aufsicht auf die Anzeigeeinheit nach Fig. 2
- Fig. 4:: zeigt eine Aufsicht auf die Anzeigeeinheit nach Fig. 2 von der Außenseite
- Fig. 5 :: einen Schnitt durch die Längsachse des Lichtleiters
- Fig. 6 :: einen Aufsicht auf den Lichtleiter,
- Fig. 7 :: einen Schnitt durch die Stirnseite des Lichtleiters

Beim Außenspiegel nach Fig. 1 ist hinter einem Spiegelglas 2 eine Anzeige 1 vorgesehen. Das Spiegelglas 2 ist auf seiner Rückseite mit einer reflektierenden Schicht 3 versehen, auf die eine Klebeschicht 4 zum Verbinden des Spiegelglases 2 mit einer Trägerplatte 5 aufgebracht ist. Die Klebeschicht 4 kann durch eine beidseitig klebende beschichtete Folie gebildet sein. Die Klebeschicht kann aber auch auf nur einer Seite mit einer dünn aufgetragenen Beschichtung versehen sein, die auf die Trägerplatte 5 oder auf die Rückseite des Spiegelglases 2 aufgebracht ist. Die Trägerplatte 5, die üblicherweise aus Kunststoff besteht, wird bei Außenspiegeln um zwei Achsen schwenkbar in einem Spiegelgehäuse befestigt. Die Trägerplatte 5 kann dadurch mechanisch oder elektrisch zur Einstellung des Spiegelglases verstellt werden.

Zum Schutz des Spiegelglases 2 ist die Trägerplatte 5 an ihrem Rand als Rahmen 6 ausgebildet, der im Querschnitt L-förmig ausgebildet ist und mit seinem äußeren Schenkel 6a das Spiegelglas 2 mit geringem Abstand umgibt. Der Schenkel 6a liegt senkrecht zum Spiegelglas 2 und steht über das Spiegelglas vor. Durch diese Ausbildung wird verhindert, dass das Spiegelglas 2 an seinem sehr empfindlichen Außenrand durch Stöße oder dergleichen beschädigt oder zerstört werden kann.

Auf der dem Spiegelglas 2 gegenüberliegenden Seite der Trägerplatte 5 befindet sich die Anzeige 1. Sie hat wenigstens ein Leuchtmittel 25, vorzugsweise eine LED, die auf einer Platine 29 befestigt ist. Sie ist auf der dem Leuchtmittel 25 zugewandten oder auf der von ihr abgewandten Seite mit Leiterbahnen 30, sogenannten Printbahnen, versehen, mit denen das Leuchtmittel 25 elektrisch leitend verbunden ist. Das vom Leuchtmittel 25 ausgestrahlte Licht 12 wird einem Lichtleiter 11 zugeführt, an dem das Leuchtmittel 25 vorteilhaft anliegt. Diese Seite des Lichtleiters 11 ist optisch so ausgebildet, dass die Strahlen 12 nahezu parallel innerhalb des Lichtleiters weitergeleitet werden. Derartige Lichtleiter 11 bestehen in der Regel aus einem veredelten Polymethylmethacrylat (PMMA). Um den Lichtleiter 11 genau gegenüber dem Leuchtmittel 25 ausrichten zu können, ist er mit einer Bezugsfläche 13 versehen, mit der er an der Trägerplatte 5 anliegend befestigt wird. Die Bezugsfläche 13 ist eben.

Der Lichtleiter 11 hat an der Einkoppelseite konisch verjüngte Einkoppeloptiken 14 mit jeweils einer Stirnseite, die an die Form des jeweiligen Leuchtmittels 25 angepasst ist. Mit Hilfe dieser Optiken werden die Lichtstrahlen 12 nahezu parallel bis zu einer Reflexionsseite 15 geleitet, die der Einkoppelseite gegenüberliegt. Im Ausführungsbeispiel ist die Reflexionsseite aus mehreren gestuften Reflexionsflächen 16 gebildet, zwischen denen Trennflächen 17 vorgesehen sind, die in ihrer Ausrichtung parallel zu den auf den Reflexionsflächen 16 auftreffenden Lichtstrahlen 12 ausgerichtet sind. Die Trennflächen 17 liegen, im Schnitt gemäß Fig. 1 gesehen, im Ausführungsbeispiel parallel zum Spiegelglas 2. Die Lichtstrahlen 12 werden an den Reflexionsflächen 16 in Richtung auf das Spiegelglas 2 umgelenkt und treffen auf eine Umlenkoptik 18, die die Lichtstrahlen 12 unter einem definierten Winkel, im Ausführungsbeispiel zum Beispiel unter einem Winkel von 30 Grad, ablenkt. Zwischen der Umlenkoptik 18 des Lichtleiters 11 und der Rückseite des Spiegelglases 2 ist ein Filter 21 vorgesehen, der einen zumindest teilweisen reflexionsfreien Bereich 7 einer Lichtaustrittsfläche 8 des Spiegelglases 2 nahezu ausfüllt. Die Umlenkoptik 18 besteht im Wesentlichen aus quer zu den Lichtstrahlen 12 angeordneten Flächen 19, die entsprechend dem Ablenkwinkel schräg aus dem Lichtleiter 11 herausgearbeitet sind. In diesem Fall sind, wie anhand der Reflexionsflächen 16 beschrieben, zwischen den einzelnen Flächen 19 Trennflächen 20 vorgesehen. Sie sind ebenfalls parallel zu den Lichtstrahlen 12 ausgerichtet, die auf die Umlenkoptik 18 auftreffen. Die im Wesentlichen quer zu den Lichtstrahlen 12 angeordneten Umlenkflächen 19 sind vorteilhafterweise innerhalb der Projektion der von den Reflexionsflächen 16 umgelenkten Lichtstrahlen 12 angeordnet.

Ein Gehäuse 10 schließt die Anzeige ein.

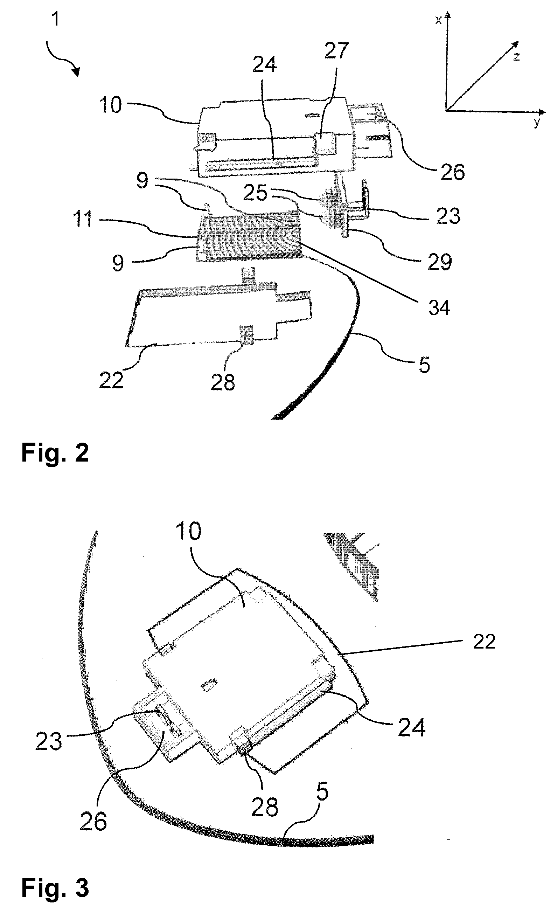

Fig. 2 zeigt einen beispielhaften Aufbau der erfindungsgemäßen optischen Anzeige 1. Die optische Anzeige 1 besteht aus einem Gehäuse 10, einem Lichtleiter 11 sowie Leuchtmitteln 25. Die optische Anzeige weist keine Abdeckung des Gehäuses 10 auf. Die Abdeckung erfolgt mit der Spiegelglasscheibe, die in Figur 2 nicht dargestellt ist.

Das Gehäuse 10 ist als hohler Quader ausgebildet, der mit seinen Innenabmessungen den Außenabmessungen des Lichtleiters 11 entspricht. Das Gehäuse weist einen Gehäuserippe 24 auf, sowie einen Aussparung, die als Gehäuseklips 27 ausgebildet ist. An das rechteckige Gehäuse ist ein in z-Richtung verkleinerter Bauraum integriert, der eine Gehäuseöffnung 26 aufweist.

Der Lichtleiter 11 weist einen im Wesentlichen rechteckigen Grundriss auf. Der Lichtleiter ist keilförmig ausgebildet, wobei an der größten Dicke des Keils eine Stirnfläche 34 ausgebildet ist, die den Leuchtmitteln 25 gegenüberliegt.
Weiterhin sind in das Bauteil des Lichtleiters 11 Abstandshalter 9 integriert.

Eine Glasträgerplatte 5 weist eine Trägerplattenöffnung 22 auf, die den Außenmaßen des Gehäuses entspricht.
Die Trägerplatte trägt zudem Trägerplattenklipse 28.

Die Leuchtmittel 25 sind auf einer Platine 29 aufgebracht und kontaktiert. Die Kontaktierung 23 ist als gewinkelte Anschlusspins ausgebildet.

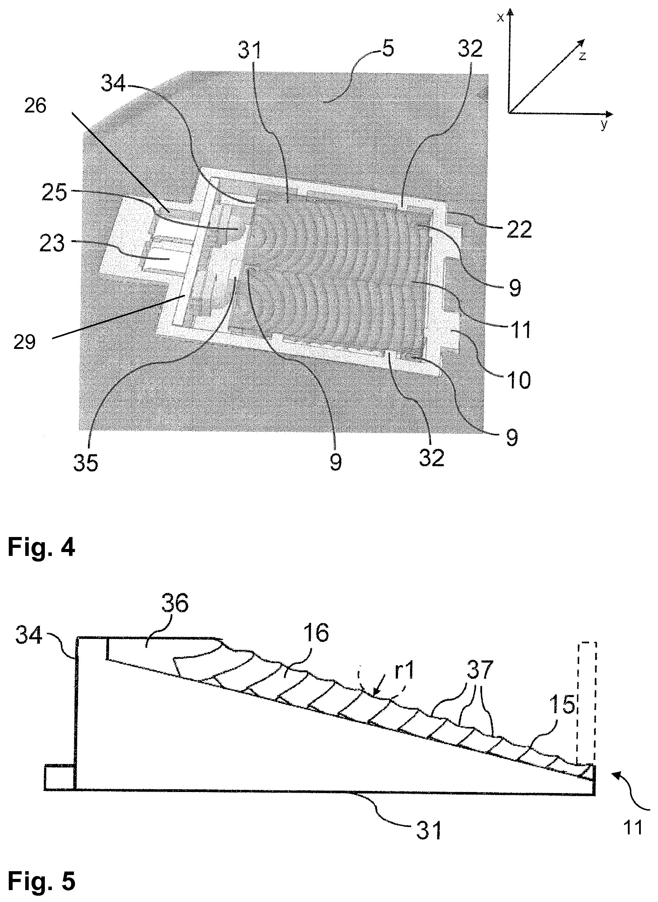

Figur 4 zeigt die Anzeige 1 im montierten Zustand von der Seite, auf die letztlich das Spiegelglas montiert wird. Die Trägerplattenöffnung 22 der Trägerplatte 5 wird vom Gehäuse 10 der Anzeige 1 vollständig ausgefüllt. Im Innern des Gehäuses ist der Lichtleiter 11 platziert. Seine plane Oberfläche 31 zeigt dabei nach oben. Die keilförmige Struktur verläuft im Innern des Gehäuses. Die Abstandshalter 9 sind als konische Stützen ausgebildet und stützen den Lichtleiter auf dem Boden des Gehäuses 10 ab. Der Lichtleiter wird in seiner z-Richtung von Nasen 32 im Gehäuse fixiert, zwischen die der Lichtleiter verpresst wird, bis er mit den Abstandshaltern 9 auf dem Gehäuseboden aufsetzt. Im Beispiel der Figur 4 ist am Gehäuseboden ein Sockel 35 angeformt, der als Lager für den Lichtleiter dient. Die Platine 29 mit den beiden Leuchtmitteln 25 wird ebenfalls von oben in eine Führung eingepresst. Die abgewinkelten Kontaktierungen 23 werden dabei durch die Gehäuseöffnung 26 des Gehäuses 10 auf die Rückseite der Trägerplatte 5 geführt. Die Leuchtmittel haben zur Stirnfläche 34 des Lichtleiters 11 einen Abstand von einigen Millimetern. Der Abstand bewirkt, dass die Strahlen der LEDs frei im Bauraum des Gehäuses ausbreiten, bevor sie in den Lichtleiter eintreten.

Figur 3 zeigt die Ansicht von der Rückseite der Trägerplatte 5 auf das Gehäuse 10. Das Gehäuse wird in die Öffnung 22 der Trägerplatte eingeschoben, bis die angespritzten Gehäuserippen 24 auf der Trägerplatte 5 aufsetzten. Mit den Trägerplattenklipsen 28 und den Gehäuseklipsen 27 wird das Gehäuse 10 fixiert. Durch die Öffnung 26 werden die Kontaktierungen 23 durchgeführt. Zum Kontaktieren werden nur noch kleine Steckverbinder benötigt. Die Position, die Größe und die Art der Gehäuseöffnung 26 werden den Anschlussleitungen angepasst. Zur Kontaktierung kann auch eine direkte Drahtkontakierung an die Leiterplatte verwendet werden, so dass durch die Gehäuseöffnung 26 Kabel geführt werden müssen.

Figur 5 zeigt einen Schnitt durch den Lichtleiter 11 entlang der Achse y. Der Lichtleiter 11 ist keilförmig aufgebaut.
An die Stirnfläche 34 angeschlossen befindet sich ein Freistrahlbereich 36, in dem sich das Licht frei verteilt. Das Licht ist dabei keinesfalls parallel, da die LED einen normalen Abstrahlwinkel von 120 Grad haben und das Licht unfokusiert in den Lichtleiter eingekoppelt wird.

Die abfallende Reflexionsfläche 15 ist mit einer schuppenförmigen Struktur versehen. Der Schnitt zeigt, dass die Struktur keine Stufen aufweist, sondern sich aus kreisförmigen Teilbereichen 37 der Reflexionsfläche 15 zusammensetzt.
Diese Teilbereiche weisen jeweils einen Radius r1. Im Ausführungsbeispiel sind alle Radien r1 gleich groß und die Kontaktstellen der Kreisabschnitte an der Oberfläche leicht abgeflacht, da diese Stoßstellen nicht wesentlich zur Lichtauskopplung beitragen.

In einer alternativen Ausführung verkleinern oder vergrößern sich die Radien vom Freistrahlbereich aus gesehen bis zur schmälsten Stelle des Lichtleiterkeils.

Die plane Fläche 31 weist gegen die Glasplatte des Spiegels. Auf dieser Oberfläche kann in einer weiteren Ausführungsform eine primatische Struktur aufgebracht werden, um Licht noch weiter zu konzentrieren und zu richten.

Der Abstandshalter 9 dient nicht nur zu Lagerung des Lichtleiters, sondern als auch als Anlagepunkt für die Auswerfer aus dem Kunststoffspritzguß-Werkzeug.

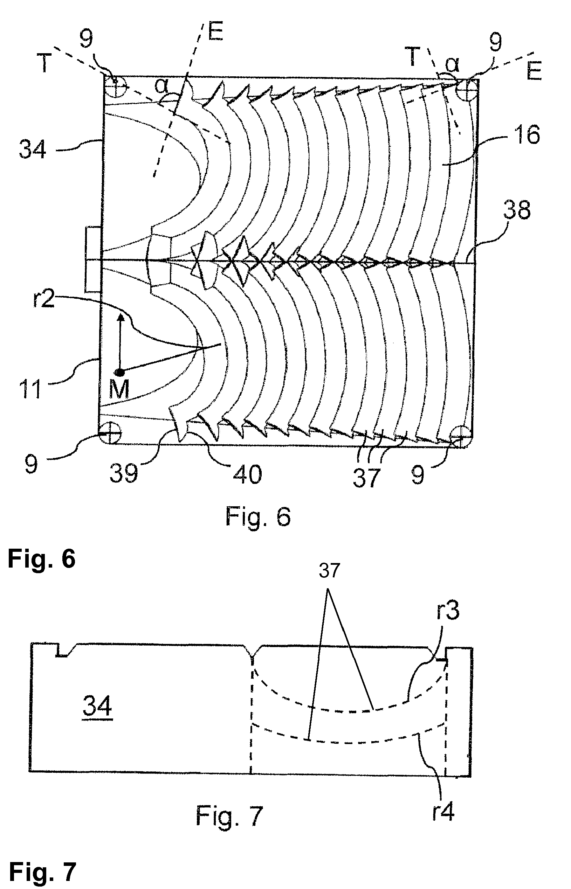

Fig. 6 zweigt die Aufsicht auf den Lichtleiter 11 mit den am Rande ausgebildeten Abstandshaltern 9.

Die Struktur ist entlang einer Mittellinie 38 zweigeteilt, da in diesem Ausführungsbeispiel zwei LEDs als Leuchtmittel verwendet werden. Es ist möglich die Struktur als einzelnen Lichtleiter zu verwenden oder weitere parallele Strukturen anzufügen, um eine größere Fläche ausleuchten zu können.

Die Schuppenstruktur besteht aus Kreissegmenten mit den Radius r3, wobei der Radius r3 vom Einkoppelpunkt an der Stirnfläche 34 bis zum Ende des Bauteils zunimmt. Zudem verschiebt sich der jeweilige Mittelpunkt M der Kreisabschnitte entlang des eingezeichneten Pfeils. Jeweils ein Teilbereich weist eine kontinuierliche Vergrößerung des Radius auf. Der jeweilige Abschluss der Teilbereiche 37 endet in Endfacetten 39, deren Winkel Alpha zwischen der Endfacettenfläche E und der Tangente T des Endpunktes der Kreisabschnitte über den gesamten Verlauf der Teilbereiche gleich bleibt. Die Endfacette 39 ist über eine gekrümmt Schulter 40 an den jeweiligen Teilbereich 37 angeschlossen.

Figur 7 zeigt eine Sicht auf die Stirnfläche 34. Gestrichelt sind die Radien der Teilflächen 37 der Reflexionsseite 15 eingezeichnet. Direkt an der Stirnfläche sind die Teilbereich und die gesamte Reflexionsfläche am stärksten nach innen gekrümmt. Die Krümmung weist einen Radius r3 nahe der Stirnfläche auf und verringert sich auf r4 am Ende des keilförmigen Lichtleiters.

Damit bildet der Lichtleiter eine wannenförmige Struktur aus, die sich jeweils von dem Einkoppelpunkt weg erstreckt. Für mehrere LEDs werden mehrere Lichtleiterwannen eingesetzt. Durch die hocheffiziente Umlenkung des Lichtes in Richtung des Fahrers durch den Lichtleiter entfällt die Verwendung eines Reflektors. Das Licht wird durch Totalreflexion geleitete und muss nicht von einem klassischen metallischen Reflektor reflektiert werden Die Definition eines klassischen Reflektors ist dabei, dass Eintritts- gleich Austrittswinkel ist, wogegen die Totalreflexion in einem Medium stattfindet und die Brechzahlunterschiede in Lichtleiter und Luft ausschlaggebend sind.

Die Abstrahlrichtung beträgt 15 bis 50 Grad von der Senkrechten auf das Spiegelglas gemessen und kann durch die Auslegung der Schuppenstruktur eingestellt werden.

Da der Reflektor entfällt, kann die optische Anzeige sehr flach aufgebaut werden. Die Bauhöhe ergibt sich durch die Größe der LEDs und der zugehörigen elektrischen Verbindungen und der Platine.

Da die optische Anzeige 1 plan zur Oberfläche der Trägerplatte arrangiert ist, wird die Trägerplatte mit der optischen Anzeige mit dem Spiegelglas verbunden. Normalerweise wird hierfür ein Doppelklebeband verwendet, das einen Ausschnitt für die Anzeige aufweist. Es ist aber auch jede andere Verbindungsform möglich, die ein Fachmann einsetzen würde.

Die optische Anzeige kann auch mit einer eigenen Abdeckung versehen werden um ein eigenständiges Modul zu schaffen.

Das Licht der Anzeige beleuchtet das Spiegelglas von hinten und macht Symbole sichtbar, die zuvor in die Reflexionsschicht eingebracht werden. Die Symbole werden erzeugt, indem alle die Transmission behinderten Schichten, wie Metalle, Interferenzschichten oder Lacke, mit Laser entfernt werden. Alternativ dazu können die Reflexionsschichten bereits mit den ausgesparten Symbolen hergestellt werden.

## Patentansprüche

1. Optische Anzeige (1) für eine Leuchtanzeige, die in einem Außenspiegel eines Fahrzeuges verwendet wird, bestehend aus
einem Gehäuse (10), das mit einem Teil des Außenspiegels eines Fahrzeugs verbindbar ist, wobei das Gehäuse
mindestens ein Leuchtmittel (25) auf einer Leiterplatte (29) und
mindestens eine Lichtleiterstruktur enthalt, wobei der Lichtleiter (11) sich von seiner Stirnseite (34), die dem Leuchtmittel (25) gegenüber liegt, keilförmig verjüngt mit einer abfallenden Reflexionsfläche (15), wobei der Lichtleiter (11) einen Freistrahlbereich (36) aufweist, der sich an die Stirnseite (34) angeschlossen befindet und in dem sich das Licht des Leuchtmittels (25) frei verteilt,
**dadurch gekennzeichnet, dass**
die abfallende Reflexionsfläche (15) mit einer schuppenförmigen Struktur versehen ist, die aus Kreissegmenten mit jeweils einem Radius (r1) besteht, und
der Lichtleiter (11) eine Wanne mit einer Krümmung mit mindestens einem Wannenradius (r3) ausbildet.

2. Optische Anzeige nach Anspruch 1 **dadurch gekennzeichnet, dass** das Gehäuse (10) mit der Rückseite eines Spiegelglases verbindbar ist, an dem die reflektierende Schicht zumindest teilweise im Bereich der anzuzeigenden Symbolen abgetragen ist.

3. Optische Anzeige nach Anspruch 1 **dadurch gekennzeichnet, dass** der Lichtleiter (11) eine wannenförmige Struktur ausbildet, die sich jeweils von dem Einkoppelpunkt weg erstreckt und in ihrem Verlauf öffnet, und der Wannenradius zunimmt.

4. Optische Anzeige nach Anspruch 1 **dadurch gekennzeichnet, dass** sich die Mittelpunkte M der Wannenradien (r3), die den Verlauf der Wannenstruktur definieren, entlang einer Linie parallel zur Stirnseite (34) bewegen.

5. Optische Anzeige nach Anspruch 1 **dadurch gekennzeichnet, dass**
der Lichtleiter (11) Teilbereiche (37) aufweist, deren Oberfläche aus Kreissegmenten mit dem Radius (r1) bestehen.

6. Optische Anzeige nach Anspruch 5 **dadurch gekennzeichnet, dass** die Kreissegmente den gleichen Radius (r1) haben.

7. Optische Anzeige nach Anspruch 6 **dadurch gekennzeichnet, dass** die Teilbereiche (37) Endfacetten (39) aufweisen, die einen Winkel (Alpha) mit der Tangente der Kreissegmente bilden.

8. Optische Anzeige nach Anspruch 7 und 3 **dadurch gekennzeichnet, dass** der Winkel (Alpha) über den Verlauf des Wannenradius (r3, r4) konstant ist.

9. Optische Anzeige nach Anspruch 7 und 3 **dadurch gekennzeichnet, dass** der Winkel (Alpha) über den Verlauf des Wannenradius (r3, r4) nicht konstant ist.

10. Optische Anzeige nach Anspruch 1 **dadurch gekennzeichnet, dass** der Lichtleiter(11) Abstandshalter (9) zur Beanstandung vom Gehäuse (10) aufweist.

11. Optische Anzeige nach Anspruch 1 **dadurch gekennzeichnet, dass** der Lichtleiter (11) eine plane Oberfläche (31) hat, die gegen die Glasplatte des Spiegels weist.

12. Optische Anzeige nach Anspruch 11 **dadurch gekennzeichnet, dass** eine zusätzliche prismatische Ebene auf der planen Oberfläche aufgebracht ist.

13. Optische Anzeige nach Anspruch 1 **dadurch gekennzeichnet, dass** bei einer LED als das Leuchtmittel (25) der Lichtleiter (11) eine Wanne mit mindestens einem Wannenradius (r3) ausbildet, während bei mehreren LEDs als Leuchtmittel (25) mehrere Lichtleiterwannen eingesetzt sind.

14. Optische Anzeige nach Anspruch 1 **dadurch gekennzeichnet, dass** mehrere Lichtleiter (11) mit parallel zueinander liegender Wannenstruktur im Gehäuse (10) installiert sind.

## Claims

1. An optical display (1) for an illuminated display, which is used in an exterior rear-view mirror of a vehicle, comprising a housing (10) which can be connected to a part of the exterior rear-view mirror of a vehicle, wherein the housing includes at least one lamp (25) on a printed circuit board (29) and at least one light conductor structure, wherein the light conductor (11) tapers, from its front (34) which is located opposite the lamp (25), in a wedge shape with a sloping reflection surface (15), wherein the light conductor (11) comprises a free beam region (36), which is connected to the front (34) and in which the light of the lamp (25) is freely distributed,
**characterized in that**
the sloping reflection surface (15) is provided with a scale-like structure, which consists of circular segments each having a radius (r1), and
the light conductor (11) forms a trough with a curvature having at least one trough radius (r3).

2. The optical display according to Claim 1, **characterized in that** the housing (10) can be connected to the rear side of a mirror glass, on which the reflecting layer is at least partially removed in the region of the symbols which are to be displayed.

3. The optical display according to Claim 1, **characterized in that** the light conductor (11) forms a trough-shaped structure which extends in each case away from the coupling point and opens in its course, and the trough radius increases.

4. The optical display according to Claim 1, **characterized in that** the midpoints M of the trough radii (r3), which define the course of the trough structure, move along a line parallel to the front (34).

5. The optical display according to Claim 1, **characterized in that** the light conductor (11) comprises sections (37), the surfaces of which consist of circular segments with the radius (r1).

6. The optical display according to Claim 5, **characterized in that** the circular segments have the same radius (r1).

7. The optical display according to Claim 6, **characterized in that** the sections (37) comprise end facets (39) which form an angle (Alpha) with the tangent of the circular segments.

8. The optical display according to Claims 7 and 3, **characterized in that** the angle (Alpha) is constant over the course of the trough radius (r3, r4).

9. The optical display according to Claims 7 and 3, **characterized in that** the angle (Alpha) is not constant over the course of the trough radius (r3, r4).

10. The optical display according to Claim 1, **characterized in that** the light conductor (11) comprises spacers (9) for locating at a distance from the housing (10).

11. The optical display according to Claim 1, **characterized in that** the light conductor (11) has a plane surface (31) which points against the glass plate of the mirror.

12. The optical display according to Claim 11, **characterized in that** an additional prismatic layer is applied on the plane surface.

13. The optical display according to Claim 1, **characterized in that** where an LED is used as the lamp (25) the light conductor (11) forms a trough with at least one trough radius (r3), whilst where a plurality of LEDs are used as lamps (25), a plurality of light conductor troughs are used.

14. The optical display according to Claim 1, **characterized in that** a plurality of light conductors (11) having a parallel trough structure to each other are installed in the housing (10).

## Revendications

1. Affichage optique (1) pour un affichage lumineux, qui est utilisé dans un rétroviseur extérieur d'un véhicule, consistant en
un boîtier (10) qui peut être relié à une partie du rétroviseur extérieur d'un véhicule, dans lequel le boîtier comprend
au moins une source d'éclairage (25) sur une plaquette de circuits imprimés (29) et
au moins une structure de guidage de lumière, dans lequel le guide de lumière (11) se rétrécir cunéiforme depuis sa face frontale (34), qui est située en face de la source d'éclairage, avec une surface réfléchissante inclinée (15), dans lequel
le guide de lumière (11) comprend une zone de faisceau libre (36) qui est contigüe à la face frontale (34), et dans laquelle la lumière de la source d'éclairage (25) se répartit librement,
**caractérisé en ce que**
la surface réfléchissante inclinée (15) est munie d'une structure en écailles, constituée de segments de cercle ayant chacun un rayon (r1), et
le guide de lumière (11) forme une cuvette avec une courbure ayant au moins un rayon de cuvette (r3).

2. Affichage optique selon la revendication 1, **caractérisé en ce que** le boîtier (10) peut être relié avec la face arrière d'un verre de miroir, lorsque la couche réfléchissante est au moins partiellement enlevée dans la zone des symboles à afficher.

3. Affichage optique selon la revendication 1, **caractérisé en ce que** le guide de lumière (11) met en oeuvre une structure en forme de cuvette qui chacun s'étend depuis le point de couplage et qui s'ouvre sur son cours, et le rayon de cuvette augmente.

4. Affichage optique selon la revendication 1, **caractérisé en ce que** les centres M des rayons de cuvette (r3), qui définissent le cours de la structure de cuvette, se déplacent le long d'une ligne parallèle à la face frontale (34).

5. Affichage optique selon la revendication 1, **caractérisé en ce que** le guide de lumière (11) comprend des zones partielles (37), dont surface est consistée de segments de cercle ayant le rayon (r1).

6. Affichage optique selon la revendication 5, **caractérisé en ce que** les segments de cercle ont le même rayon (r1).

7. Affichage optique selon la revendication 6, **caractérisé en ce que** les zones partielles (37) comprenant des facettes d'extrémité (39) qui forment un angle (Alpha) avec la tangente aux segments de cercle.

8. Affichage optique selon les revendications 7 et 3, **caractérisé en ce que** l'angle (Alpha) est constant sur le course du rayon de cuvette (r3, r4).

9. Affichage optique selon les revendications 7 et 3, **caractérisé en ce que** l'angle (Alpha) n'est pas constant sur le course du rayon de cuvette (r3, r4).

10. Affichage optique selon la revendication 1, **caractérisé en ce que** le guide de lumière (11) comprend des entretoises (9) pour écartement contre le boîtier (10).

11. Affichage optique selon la revendication 1, **caractérisé en ce que** le guide de lumière (11) a une surface plane (31), dirigée à l'opposé de la plaque de verre du miroir.

12. Affichage optique selon la revendication 11, **caractérisé en ce qu'**un plan prismatique supplémentaire est appliqué sur la surface plane.

13. Affichage optique selon la revendication 1, **caractérisé en ce qu'**au moyen d'une LED servant de la source d'éclairage (25), le guide de lumière (11) forme une cuvette ayant au moins un rayon de cuvette (r3) tandis qu'au moyen de plusieurs LED servant de source d'éclairage (25) plusieurs cuvettes étant utilisées.

14. Affichage optique selon la revendication 1, **caractérisé en ce qu'**une pluralité de guides de lumière (11) sont installés dans le boîtier (10), ayant une structure de cuvette parallèlement les uns aux autres.
